# EUROPEAN PATENT SPECIFICATION

(11) **EP 3 406 089 B1**
(45) Date of publication and mention of the grant of the patent: **01.04.2020**
(21) Application number: 17705323.8
(22) Date of filing: 07.02.2017
(51) Int. Cl.: H04W 4/80, H04W 52/26, H04W 52/32

(54) **ADAPTING BEACON TRANSMISSION RATE AND/OR POWER BASED ON A RECEIVED SIGNAL**
ANPASSUNG DER BEACONÜBERTRAGUNGSRATE UND/ODER LEISTUNG BASIEREND AUF EINEM EMPFANGENEN SIGNAL
ADAPTATION DU DÉBIT ET/OU DE LA PUISSANCE DE TRANSMISSION D'UNE BALISE SUR LA BASE D'UN SIGNAL REÇU

(30) Priority: 17.03.2016 DE 102016204431
(43) Date of publication of application: 28.11.2018
(73) Proprietor: Siemens Aktiengesellschaft, 80333 München (DE)
(72) Inventor: RAMIREZ, Alejandro, 80797 München (DE); GOODRICK, Kyle, Boulder, CO 80303 (US)
(86) International application number: PCT/EP2017/052629
(87) International publication number: WO 2017/157582

(56) References cited:
- EP-A1- 2 963 953
- JP-A- 2006 050 243
- US-A1- 2016 014 671
- US-B1- 9 282 582

## Description

### Field of the Invention

The invention relates to a beacon for transmitting data and a method for adapting a transmission rate or/and transmission power.

### Background

So called "beacons" are devices sending on a wireless transmission standard, in particular a Bluetooth standard in a limited area, e.g. near an exposition object in a museum or near a shop for advertisement or in a, in particular, indoor location for navigating a pedestrian.

Beacons are normally powered using batteries, which are, due to the often small size of the beacon also small and have correspondingly little capacity. Thus, beacons run out of battery quickly, which requires frequent, expensive and time-consuming battery swaps.

There are currently several methods employed in order to increase the battery life of beacons. The first is using a higher capacity battery. Using a higher capacity battery directly effects how long the device lasts. However, higher capacity batteries are generally larger than lower capacity batteries and cause the overall size of the device to increase which normally constitutes a disadvantage. As the majority of the size of the beacons comes from the size of the battery, larger batteries have a significant impact on the overall size. In addition to increased size, higher capacity batteries are normally more expensive and this relationship is not linear: For example, there are two types of beacons of the same manufacturer on the market; the first has device has a battery with a capacity of 225 mAh that costs $0.28 and the second has a battery with a 1000 mAh capacity that costs $2.94. This is more than a tenfold (10.5x) increase in price for less than five times (4.44x) the increase in battery capacity.

Another method used for increasing the battery life in beacons is to permanently decrease the transmit power or advertising rate. Decreasing either of those values is undesirable, as it will reduce the beacons ability to provide accurate information for the Bluetooth locating service. With a reduced beacon advertising rate, the device trying to determine its location will receive less frequent updates and the location changes will have a longer delay. At slow walking speeds this delay may not be noticeable; however, at a brisker pace these changes will be significant and there will be a considerable lag in the current position.

In addition, available location finding algorithms make use of an average over time. Therefore, a slower advertising rate will have a large impact on the time required to acquire the initial position, as it will take longer to receive the first advertised signal.

Furthermore, a reduced transmit power can also decrease the performance of the system, because the transmit power of the beacons directly affects the range of the signal and its ability to penetrate through obstacles such as walls. If the beacons are spaced far apart, a reduced transmit power may create dead spots where the user is not in range of any beacons and would be unable to determine the current location. In order to fix this problem without changing the transmit power the beacons would need to be spaced much closer to one another. This would require more beacons for the same area increasing the initial costs and the corresponding maintenance of the additional beacons.

Another possibility to cope with the limited battery capacity is to use instead of batteries a fixed power supply for beacons that are placed in fixed locations and are rarely if ever moved. There are beacons available that are powered via a standard USB port. These beacons are not only completely free of batteries and maintenance; they have a much smaller form factor than the typical battery powered beacons. The USB powered beacons are able to transmit at the same power as their battery powered alternative and appear exactly the same to other Bluetooth devices. A disadvantage is, however, to install USB ports at the same places than the beacons. This involves an important increase in the installation costs due to additional cabling.

EP 2 963 953 A1 discloses a radio device with a Bluetooth beacon circuitry for generating and advertising a Bluetooth beacon signal. The radio device comprises a proximity communication circuitry configured to receive configuration commands wirelessly from a physically separate user device over a magnetic induction-based proximity communication.

US 9 282 582 B2 discloses a battery powered wireless beacon in which battery usage is reduced by reducing a transmission rate or ceasing transmission of advertisement packets. The beacon can receive instructions from a server to transition to a power saving mode, such as states where the transmission frequency of advertisement packets is reduced or where the transmission of advertisement packets is halted.

US 2016/0014671 A1 discloses a mesh network device that may have a sensor to detect ambient lighting conditions. The wireless mesh network device may be used to connect devices to each other, and to cloud-based services, for sensing environmental conditions, controlling equipment, and providing information and alerts to users.

JP 2006 050243A discloses radio communication equipment adapted to reduce power consumption by transferring a state to a power saving state even under a condition not necessarily requiring a wider band and low latency.

It is one object of the invention to offer a possibility to reduce disadvantages in respect of powering beacons.

### Brief Summary of the Invention

This is solved by what is disclosed in the independent claims. Advantageous embodiments are subject of the dependent claims.

The invention relates to a beacon for broadcasting data to a plurality of devices. The data are broadcast in a certain range around the beacon which is in particular determined by the used radio interface or/and the surroundings of the beacon.

According to exemplary embodiments as the beacon's radio interface Bluetooth, WiFi or Zigbee may be used. The devices to which data are broadcast are in particular mobile communication devices such as smart phones, or other beacons.

The beacon comprises an interface for receiving a signal received from a sensor which is, in particular, capable of measuring a quantity in the environment of the beacon.

A processing unit of the beacon, e.g. a microprocessor, is arranged such that it generates a control signal for adapting the transmission of data depending on the received signal.

The sensor comprises a light sensor for determining light intensity in the environment of the beacon. The transmission-rate or/and transmission power is varied essentially proportional to the light intensity.

In particular, the control signal is fed into the sending unit, which performs the adaption, in particular of the transmission rate or/and transmission power.

In particular, the data sent during the advertising phase are adapted. This has the particular advantage, that during this-possibly long-lasting phase- the transmission rate and power can be significantly reduced if there is a low probability of a device being close enough for data transmission. Thus, battery resources can be saved.

The invention further relates to a corresponding method and a piece of software.

### Brief description of the drawings:

Further embodiments, features, and advantages of the present invention will become apparent from the subsequent description and dependent claims, taken in conjunction with the accompanying drawings of which show:
- Fig. 1:: a schematic flow chart describing a setting of transmitting power and advertising rate
- Fig.2:: a schematic description of an exemplary beacon.

In the examples described below, it is mainly referred to Bluetooth beacons. However, other wireless standards suited for a small range until about 15 m including Wi-Fi and ZigBee might be applied as well.

According to advantageous embodiments, the Bluetooth beacons broadcast in regular intervals a so called advertisement signal to announce its presence to nearby communication devices, such as mobile phones etc. If a respective application is installed on the mobile phone, this advertisement signal can be detected and a response can be sent to the beacon. Thereon the beacon sends data on a data channel. Often this is a broadcast channel, i.e. not dedicated to a specific user. Apart from a short time window, in which the presence of a non-beacon device is detected, a beacon normally operates only as sender, not as receiver.

This advertisement signal generally contains a unique identifier for the beacon, group information for the beacon and a receiving power to distance calibration value. Group information is an identity which is shared by several beacons which may help to identify a building, as all beacons in that building would have the same information. The exact values contained in the broadcast depend on the protocol used by the beacon.

There are currently several beacon protocols including iBeacon, AltBeacon, Eddystone, and UriBeacon. The iBeacon format is maintained by Apple, Eddystone and UriBeacon by Google, and AltBeacon by Radius Networks. The UriBeacon protocol was very recently folded into the Eddystone protocol by Google.

As laid out above, Bluetooth beacons are generally powered by small batteries, e.g. watch batteries and as such will quickly run out of power if left running with a high transmit power or advertising rate.

Transmission power is the amount of power used when the beacon is transmitting a signal, such as an advertisement signal or data signal. Transmission power is normally measured in Decibel-Milliwatts (dBm), i.e. the power ratio of the measured power in comparison to 1mW, or directly in Milliwatts (mW).

Advertising rate is the time in between the individual broadcasts of an advertising signal. An advertising rate is normally measured in seconds (s) with typical values being in the range of 0.1 - 2 seconds.

Current beacons transmitting at their max power of 4 dBm and a comparably slow advertising rate of once per second are expected to last approximately two and a half months with the previously mentioned watch batteries.

This changes of course when using shorter rates, e.g. 0.1s, at which some devices operate more satisfyingly as they deliver more accurate information.

It is one important aspect of the invention to detect automatically whether a beacon is not in use or prone not to be in use and thereupon decrease transmission power or/and transmission rate, in particular the advertising rate. Thus battery life can be increased significantly.

It is a further aspect of the invention to dynamically change the transmission power and the advertising rate depending on need and usage to improve battery life. The described embodiments allow the Bluetooth beacons to change transmission power and rate. This has significant advantages in comparison to reducing the transmission power or advertising rate on a predefined fixed schedule, let alone permanently. The fixed schedule can either be set during manufacturing or it can be set by the user at a later date. This scheduling of the beacons performance can allow for the beacon to operate in the highest power consuming mode only during times that is likely to be used. The rest of the time it can operate in a mode that uses much less power. This can allow for significantly extended battery life, however, this leads to very rigid usage models as the specific times for switching have been defined months in advance, which may lead to a large degradation in the performance if circumstances are not as predicted.

According to exemplary embodiments, a beacon that is being used extensively by several devices will transmit at the maximum power and advertising rate, while one that is not being used will transmit at a very low power and with a slow advertising rate or even not transmit at all depending on actual environmental circumstances.

A further aspect is that beacons communicate with beacons around it so that users determining their location based on the signal strength of beacons are only seeing beacons transmitting at the same power. This facilitates location determination.

An even further aspect consists in that the beacon can make use of one or more sensors that can allow the beacon to determine if it is likely to be used. Preferably, the one or more sensors measure environmental quantities. The sensors might be built integrally with the beacon or the beacon may have an interface to access the sensor data.

According to an exemplary embodiment the sensor comprises one or more light sensors that are integrated into the beacon. A decrease of advertisement rate or/and transmission power takes place when the lights in a room are off. Advantageously the beacons are put into an energy saving mode as the system will likely not be used.

One option for an energy saving mode is that no signals are sent at all until a change in the signal of the sensor measuring environmental quantities takes place, e.g. the light is switched on and therefore the luminosity increases.

Another option for an energy saving mode is a reduction of advertisement rate or/and transmission power. More than one energy saving mode with different rates or/and powers might be used.

In the example of the light sensor overall cost can be reduced, because simple light sensors cost only a few euro cents per beacon, however, this may lead to savings in the maintenance costs of €10-€100 during the beacon's lifetime.

According to another exemplary embodiment, other sensors are included in other environments where another change in an environmental condition could signify that the beacon is no longer in use.

According to an example, one or more motion detectors could be used to turn the beacons on or off in an open area or temperature sensors in an environment that would experience temperature changes when the system is in use.

While beacons typically work in a transmit-only mode, except for when it is initially powered, as it can receive for a few seconds at that point as explained above, a more advanced system could use the beacon as a transceiver: a beacon could listen for Bluetooth devices in its proximity and check if a phone is nearby, for example, through the reception of a Bluetooth frame which is not a Beacon Frame, or decoding the contents of a Beacon Frame to identify a phone. At that point it would get into a very active mode, sending at maximum power, with the highest advertising rate.

Similarly, according to another embodiment, neighboring beacons listen for a beacon that is newly into the very active mode, and can use that as an indicator to get into the very active mode, too.

Even further, if the beacons work as a transceiver, this will allow phones to directly request specific transmission powers or advertising intervals and for those requests to be passed on to other beacons in the area.

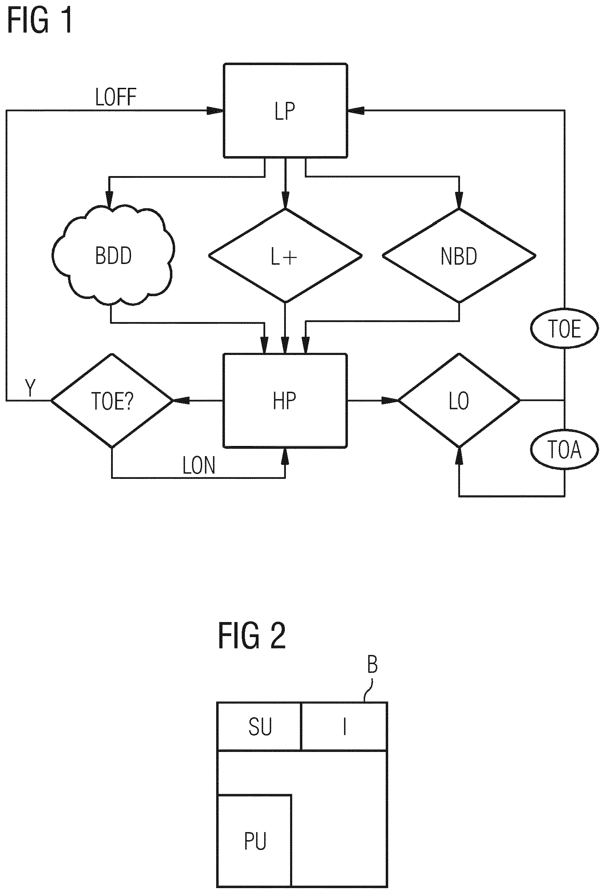

The flow chart in Fig. 1 shows the detailed steps a beacon would take during an exemplary normal operation. For the purpose of this example "high power" denotes an advertising rate of 0.1 Hz and a transmission power of 4 dBm and "low power" will denote an advertising rate of 1 Hz and a transmission power of -4 dBm.

In the morning the lights in the area, e.g. a room are off and the beacon is transmitting in step LP at low power/low rate mode with 1 Hz and -4dBm. In step L+, someone comes in, turns the light on, and the beacon's light sensor detects this change. The beacon is in step HP transmitting at high power with a rate of 10 Hz and +4dBm. In step NBD at some point during the day the beacon detects a Bluetooth frame from a non-beacon device. The beacon continues transmitting at high power and sending a message to other beacons in the area letting them know that a device has connected.

This message may include a timeout that will let the other beacons know how long to transmit at high power. At night the lights are turned off in a step LO and the beacon will switch in step LP to low power mode when the light sensor detects the change, if the time out has expired in step TOE. As long as the time out is in the loop TOA, the high power mode is maintained.

At some point during the night the beacon receives in step BDD a message from another beacon letting it know that a nearby device has been detected and the beacon will switch to the high power mode. In the message the other beacon mentioned that it should stay on for one hour. After one hour the beacon switches back into low power mode if it has not received any new messages. In this specific example, the second beacon doesn't need a light sensor. This scenario is depicted in the loop on the left hand side where in step TOE? it is checked whether the time out period has already expired and, if the lights are on in loop LON the high power mode HP is switched on, if the lights are off in loop LOFF the low power mode LP is switched on.

One advantageous aspect is the inclusion of the environmental sensors, e.g. one or more light sensors, and the communication between beacons. The light sensor detects the light level in the room and allows the beacon to turn itself off or down when the room's lights are off.

An advantageous embodiment of a beacon is depicted schematically in Fig. 2.

A beacon B comprises a sending unit SU for sending data. Further, an interface I for receiving a signal from a sensor or/and a device, e.g. a mobile communication device or another beacon is provided for. This signal is fed to a processing unit PU, which is arranged such, that it generates a control signal for changing properties of the data to be sent, in particular the transmission rate or/and transmission power. This signal is made available to the sending unit SU.

In comparison to existing solutions the exemplary embodiments have several advantages.

A first advantage is increased battery life. Our system is designed to turn the beacons down much more often than a simple calendar based system would and as a result increases the overall battery life of the beacons. This increased battery life has many advantages for the system. The first is reduced costs for batteries for the first installation; the batteries last longer; hence the cost of replacing them is spread out in time. Further, there are reduced maintenance costs as the batteries need to be replaced less often. As intended scenarios could use as many as 16,000 beacons these labor costs could be quite high.

A second advantage is increased performance which means that while the system is being used each beacon is broadcasting at a faster advertising rate or with a higher transmission power. As our system dynamically changes these, the user does not notice a difference in performance compared to the values as it will always see beacons being in "high power" mode, but the system would still be able to go into "low power" mode without a user ever seeing it.

A third advantage is that there is almost no influence on size, as additionally only a small sensor is required. A typical size of a light sensor is around ∼4mm²). Thus the size of the beacon does not need to increase to achieve a greater battery life as it would be the case if a battery with a higher capacity was used that is normally larger.

This allows storing the beacon in tight places that might be inaccessible with a beacon that is physically larger and also reduces the manufacturing costs as the raw material required is reduced. The prices are further reduced when you take into account the cost of higher capacity batteries.

As mentioned earlier, many beacon manufacturers have started to produce beacons that are powered, not by batteries, but by USB ports. These beacons eliminate all of the problems associated with battery powered beacons. They have the disadvantage of requiring permanent wiring to each beacon location. The permanent wiring is low voltage, low current, DC power and in the case of an existing building, the additional cabling will imply a huge effort. The USB powered beacons are much smaller compared to the battery powered alternatives only if cables and connectors are not taken into account. Hence, using beacons with small batteries can establish an advantage in regard to size.

Although the present invention has been described in accordance with preferred embodiments, it is obvious for the person skilled in the art that modifications or combination between the embodiments, fully or in one or more aspects, are possible in all embodiments.

## Claims

1. Beacon (B) for transmitting data to a plurality of devices in a certain range comprising
- an interface (I) for receiving a signal received from a sensor,
- a processing unit (PU) which is arranged to generate a control signal for an adaptation of the transmission of data depending on the received signal, **characterised by**:
wherein the sensor comprises a light sensor for determining light intensity in the environment of the beacon (B), and
wherein the transmission rate or/and transmission power is varied essentially proportional to the light intensity.

2. Beacon (B) according to any of the previous claims, wherein the beacon (B) operates according to a Bluetooth standard, in particular according to one of the following protocols:
- iBeacon
- AltBeacon
- Eddystone
- UriBeacon.

3. Beacon (B) according to any of the previous claims, wherein the sensor is integrally designed with the beacon

4. Beacon (B) according to any of the previous claims, wherein the the beacon further makes use of at least one of
- a motion detection sensor for detecting motion in the surroundings or a part of the surroundings of the beacon (B);
- a temperature sensor for measuring the temperature of the environment of the beacon (B);
- a receiving unit for receiving signals from devices around the beacon (B).

5. Beacon (B) according to the previous claim wherein the beacon further makes us of another sensor which comprises a receiving unit for receiving signals from devices around the beacon and the number of devices is determined by the processing unit (PU) depending on a signal from the another sensor and wherein the transmission power is further adapted according to the determined number of devices.

6. Beacon (B) according to any of the previous claims, wherein the beacon is adapted to work as a transceiver outside a time interval where a connection is set up.

7. Beacon (B) according to any of the previous claims,
- wherein the beacon is adapted for detecting the presence of a beacon transmitting according to a wireless transmission standard, in particular a Bluetooth standard,
- and wherein the beacon is suited for communication with neighbored beacons, in particular for exchanging information in regard to the transmission power which is to be used in a position determining method.

8. Beacon (B) according to any of the previous claims further adapted for detecting the presence of a device not being a beacon, in particular a mobile phone, by determining whether a received frame is from a beacon, in particular by decoding at least one received frame and wherein upon detection of a non-beacon device the transmission rate or/and transmission power is increased.

9. Beacon (B) according to any of the previous claims, wherein the beacon is adapted for receiving a signal from a non beacon device requesting a transmission rate or/and transmission power.

10. Method for adapting a transmission rate or/and transmission power of a beacon comprising the following steps
- broadcasting, by the beacon (B), data to a plurality of devices,
- receiving, by an interface (I) a signal from a sensor,
- adapting, by a processing unit (PU), the transmission rate or/and transmission power depending on the received signal, **characterised by**:
wherein the signal from the sensor represents the light intensity in the environment of the beacon (B), and
wherein the transmission rate or/ and transmission power is varied essentially proportional to the light intensity.

11. Piece of Software for executing the method according to claim 10, when run on a computer.

## Patentansprüche

1. Bake (B) zum Übertragen von Daten zu mehreren Vorrichtungen in einem bestimmten Bereich, die Folgendes umfasst:
- eine Schnittstelle (I) zum Empfangen eines Signals aus einem Sensor,
- eine Verarbeitungseinheit (PU), die so eingerichtet ist, dass sie ein Steuersignal für eine Anpassung der Übertragung von Daten in Abhängigkeit von dem empfangenen Signal erzeugt,
**dadurch gekennzeichnet,**
**dass** der Sensor einen Lichtsensor zum Bestimmen der Lichtstärke in der Umgebung der Funkbake (B) umfasst und
wobei die Übertragungsrate und/oder die Übertragungsleistung im Wesentlichen proportional zur Lichtstärke geändert wird.

2. Bake (B) nach einem der vorhergehenden Ansprüche, wobei die Bake (B) einem Bluetooth-Standard, insbesondere einem der folgenden Protokolle entsprechend arbeitet:
- iBeacon
- AltBeacon
- Eddystone
- UriBeacon.

3. Bake (B) nach einem der vorhergehenden Ansprüche, wobei der Sensor mit der Bake einstückig gestaltet ist.

4. Bake (B) nach einem der vorhergehenden Ansprüche, wobei die Bake ferner
- einen Bewegungssensor zum Erfassen von Bewegung in der Umgebung oder einem Teil der Umgebung der Bake (B),
- einen Temperatursensor zum Messen der Temperatur in der Umgebung der Bake (B) und/oder
- eine Empfangseinheit zum Empfangen von Signalen aus um die Bake (B) herum befindlichen Vorrichtungen nutzt.

5. Bake (B) nach dem vorhergehenden Anspruch, wobei die Bake ferner einen weiteren Sensor nutzt, der eine Empfangseinheit zum Empfangen von Signalen aus um die Bake herum befindlichen Vorrichtungen umfasst, und die Anzahl Vorrichtungen von der Verarbeitungseinheit (PU) in Abhängigkeit von einem Signal von dem weiteren Sensor bestimmt und die Übertragungsleistung ferner der bestimmten Anzahl Vorrichtungen entsprechend angepasst wird.

6. Bake (B) nach einem der vorhergehenden Ansprüche, wobei die Bake so ausgelegt ist, dass sie außerhalb eines Zeitraums, in dem eine Verbindung aufgebaut wird, als Transceiver fungiert.

7. Bake (B) nach einem der vorhergehenden Ansprüche,
- wobei die Bake zum Erfassen des Vorhandenseins einer Bake ausgelegt ist, die einem Standard für die drahtlose Übertragung, insbesondere einem Bluetooth-Standard entsprechend überträgt,
- und wobei sich die Bake für den Datenaustausch mit benachbarten Baken, insbesondere für den Austausch von Informationen bezüglich der bei einem Positionsermittlungsverfahren zu verwendenden Übertragungsleistung eignet.

8. Bake (B) nach einem der vorhergehenden Ansprüche, die ferner zum Erfassen des Vorhandenseins einer Vorrichtung, insbesondere eines Mobiltelefons, ausgelegt ist, bei der es sich nicht um eine Bake handelt, indem sie bestimmt, ob ein empfangener Frame von einer Bake stammt, indem sie insbesondere mindestens einen empfangenen Frame decodiert, und wobei bei Erfassen einer Vorrichtung, bei der es sich nicht um eine Bake handelt, die Übertragungsrate und/oder die Übertragungsleistung erhöht wird.

9. Bake (B) nach einem der vorhergehenden Ansprüche, wobei die Bake zum Empfangen eines Signals aus einer Vorrichtung, bei der es sich nicht um eine Bake handelt, ausgelegt ist, das eine Übertragungsrate und/oder eine Übertragungsleistung anfordert.

10. Verfahren zum Anpassen einer Übertragungsrate und/oder einer Übertragungsleistung einer Bake mit den folgenden Schritten:
- Rundsenden von Daten zu mehreren Vorrichtungen durch die Bake (B),
- Empfangen eines Signals aus einem Sensor über eine Schnittstelle (I),
- Anpassen der Übertragungsrate und/oder der Übertragungsleistung in Abhängigkeit von dem empfangenen Signal über eine Verarbeitungseinheit (PU), **dadurch gekennzeichnet, dass**:
das Signal aus dem Sensor die Lichtstärke in der Umgebung der Bake (B) repräsentiert und
wobei die Übertragungsrate und/oder die Übertragungsleistung im Wesentlichen proportional zur Lichtstärke variiert.

11. Software zum Ausführen des Verfahrens nach Anspruch 10, wenn sie auf einem Computer ausgeführt wird.

## Revendications

1. Une balise (B) destinée à la transmission de données à une pluralité de dispositifs dans une portée donnée comprenant
- une interface (I) destinée à la réception d'un signal reçu d'un capteur,
- une unité de traitement (PU) qui est agencée de façon à générer un signal de commande destiné à une adaptation de la transmission de données en fonction du signal reçu,
**caractérisée en ce que** :
le capteur comprend un capteur de lumière destiné à la détermination d'une intensité lumineuse dans l'environnement de la balise (B), et dans laquelle la vitesse de transmission et/ou la puissance de transmission est variée essentiellement proportionnellement à l'intensité lumineuse.

2. La balise (B) selon l'une quelconque des revendications précédentes, dans laquelle la balise (B) fonctionne en fonction d'une norme Bluetooth, plus particulièrement en fonction d'un des protocoles suivants :
- iBeacon
- AltBeacon
- Eddystone
- UriBeacon.

3. La balise (B) selon l'une quelconque des revendications précédentes, dans laquelle le capteur est conçu d'un seul tenant avec la balise.

4. La balise (B) selon l'une quelconque des revendications précédentes, dans laquelle la balise utilise en outre au moins un élément parmi
- un capteur de détection de mouvement destiné à la détection d'un mouvement dans les environs ou dans une partie des environs de la balise (B),
- un capteur de température destiné à la mesure de la température de l'environnement de la balise (B),
- une unité de réception destinée à la réception de signaux à partir de dispositifs autour de la balise (B).

5. La balise (B) selon la revendication précédente dans laquelle la balise utilise en outre un autre capteur qui comprend une unité de réception destinée à la réception de signaux à partir de dispositifs autour de la balise et le nombre de dispositifs est déterminé par l'unité de traitement (PU) en fonction d'un signal provenant de l'autre capteur et dans laquelle la puissance de transmission est adaptée en outre en fonction du nombre de dispositifs déterminé.

6. La balise (B) selon l'une quelconque des revendications précédentes, dans laquelle la balise est adaptée de façon à fonctionner en tant qu'émetteur-récepteur en dehors d'un intervalle temporel pendant lequel une connexion est établie.

7. La balise (B) selon l'une quelconque des revendications précédentes,
- dans laquelle la balise est adaptée de façon à détecter la présence d'une balise transmettant en fonction d'une norme de transmission sans fil, plus particulièrement une norme Bluetooth,
- et dans laquelle la balise convient à une communication avec des balises voisines, plus particulièrement à l'échange d'informations concernant la puissance de transmission qui doit être utilisée dans un procédé de détermination de position.

8. La balise (B) selon l'une quelconque des revendications précédentes adaptée en outre de façon à détecter la présence d'un dispositif qui n'est pas une balise, plus particulièrement un téléphone mobile, par la détermination si une trame reçue provient d'une balise, plus particulièrement par le décodage d'au moins une trame reçue et dans laquelle, après la détection d'un dispositif non balise, la vitesse de transmission et/ou la puissance de transmission est augmentée.

9. La balise (B) selon l'une quelconque des revendications précédentes, dans laquelle la balise est adaptée de façon à recevoir un signal à partir d'un dispositif non balise demandant une vitesse de transmission et/ou une puissance de transmission.

10. Un procédé d'adaptation d'une vitesse de transmission et/ou d'une puissance de transmission d'une balise comprenant les étapes suivantes
- la radiodiffusion, par la balise (B), de données à une pluralité de dispositifs,
- la réception, par une interface (1) d'un signal à partir d'un capteur,
- l'adaptation, par une unité de traitement (PU), de la vitesse de transmission et/ou de la puissance de transmission en fonction du signal reçu, **caractérisée en ce que** :
le signal provenant du capteur représente l'intensité lumineuse dans l'environnement de la balise (B), et la vitesse de transmission et/ou la puissance de transmission est variée essentiellement proportionnellement à l'intensité lumineuse.

11. Un logiciel destiné à l'exécution du procédé selon la revendication 10, lorsqu'il est exécuté sur un ordinateur.
